# EUROPÄISCHE PATENTSCHRIFT

(11) **EP 3 657 152 B1**
(45) Veröffentlichungstag und Bekanntmachung des Hinweises auf die Patenterteilung: **04.10.2023**
(21) Anmeldenummer: 18208262.8
(22) Anmeldetag: 26.11.2018
(51) Int. Cl.: G01N 1/22, G01N 15/06, G01N 15/00

(54) **PROBE ZUR PARTIKELMESSUNG, PROBENBEHÄLTER UND VERFAHREN ZUR PARTIKELMESSUNG**
SAMPLE FOR MEASURING PARTICLES, SAMPLE CONTAINER AND METHOD FOR MEASURING PARTICLES
ÉCHANTILLON DE MESURE DE PARTICULES, RÉCIPIENT D'ÉCHANTILLON ET PROCÉDÉ DE MESURE DE PARTICULES

(43) Veröffentlichungstag der Anmeldung: 27.05.2020
(73) Patentinhaber: OHB System AG, 28359 Bremen (DE); Fraunhofer-Gesellschaft zur Förderung der angewandten Forschung e.V., 80686 München (DE)
(72) Erfinder: Müller, Axel, 83624 Otterfing (DE); Kreck, Guido, 80686 München (DE); Holzapfel, Yvonne, 80686 München (DE)
(74) Vertreter: Hoffmann Eitle

(56) Entgegenhaltungen:
- WO-A1-2017/099100
- WO-A2-2006/116356
- WO-A2-2007/009863
- US-A1- 2005 214 745
- US-A1- 2005 266 415
- US-A1- 2006 176 492
- Anonymous: "Makler Counting Chamber", , 14. November 2017 (2017-11-14), Seiten 1-2, XP055594068, Gefunden im Internet: URL:https://web.archive.org/web/2017111410 0338/http://www.sefimedical.com/makler1.ht m [gefunden am 2019-06-04]

## Beschreibung

### Technisches Gebiet

Die Erfindung betrifft eine Probe für die Partikelmessung, einen Probenbehälter hierfür sowie ein Verfahren zur Partikelmessung.

In zahlreichen Situationen ist sowohl bei der Herstellung als auch bei der Verarbeitung oder dem Gebrauch von Bauteilen, Komponenten oder Produkten die partikulare Sauberkeit besonders wichtig. Da hieran besondere Anforderungen gestellt werden, ist eine Kontrolle der Sauberkeit erforderlich. Dies betrifft beispielsweise Reinraum- und Raumfahrtanwendungen. Ähnliche Anforderungen werden gestellt, wenn beispielsweise Größenverteilungen, Staubzusammensetzungen oder ein Kolonienwachstum, beispielsweise von Bakterien, gemessen werden soll. Ähnlich wie bei dem oben an erster Stelle beschriebenen Anwendungsfall sind hier Teilchenverteilungen zu charakterisieren. Schließlich sind ähnliche Proben verwendbar, wenn ein 2D- oder 3D-Druckergebnis charakterisiert werden soll.

### Stand der Technik

Zum Partikelzählen sind zum einen Verfahren bekannt, bei denen eine Probe von einem Menschen durch ein Mikroskop betrachtet und die Partikel gezählt und charakterisiert werden. Ein derartiges Verfahren ist vergleichsweise teuer, unterliegt im Hinblick auf die Handhabbarkeit jedoch erheblichen Beschränkungen, da die Probe und das Gerät selbst in extrem sauberer Umgebung gehandhabt werden müssen, und die Probe üblicherweise nicht in eine hierfür relevante Umgebung, wie z.B. in ein Bauteil als zu messende Bezugsfläche , eingebaut werden kann. Die Sicherung von reproduzierbaren Ergebnissen und Prüfvorschriften ist folglich sehr schwierig. Das Verfahren ist ferner eingeschränkt hinsichtlich Anzahl der Messungen und Anzahl an auszuwertenden Objekten.

Daneben sind indirekte Verfahren bekannt, bei denen die Partikelkontamination beispielsweise mittels eines Klebestreifens abgenommen wird, und nachfolgend analysiert wird. Dies geschieht beispielsweise durch Auflösen des Klebestreifens, so dass die Partikel separiert werden können, oder durch Filtrieren einer Flüssigkeit, welche die Partikel von den Klebestreifen entfernt. Hierbei bestehen jedoch die Nachteile, dass eine fragliche Fläche direkt beprobt werden muss, durch die Klebekraft ein Schaden an Beschichtungen entstehen kann und der Kleber hierbei an der Oberfläche zurückbleiben kann. Außerdem können Ungenauigkeiten dadurch bestehen, dass sich zusätzlich zu den Partikeln beispielsweise Oberflächenbeschichtungen ablösen, und/oder die Oberfläche durch den haftenden Kleber beschädigt wird. Schließlich besteht für das beschriebene Verfahren ein erheblicher Platzbedarf für das Aufbringen und Abziehen des Klebestreifens. Diese Verfahren beinhalten mehrere Aspekte wie Verunreinigungen auf dem Tape, Aufnahme der Partikel, Haftkraft am Kleber, Nachweis im Filtermedium usw. die basierend auf Materialkombination, Partikel und Nachweismethode experimentell bestimmt werden müssen. Diese Effekte spielen in die Genauigkeit des Ergebnisses hinein. Ebenfalls muss sichergestellt werden dass die Methode weder den Messwert noch das Bauteil negativ verändern.

Ein Filtrieren wird ebenfalls bei einem Verfahren verwendet, bei dem ein Bauteil oder eine Probe mittels Flüssigkeit abgespült wird, die dann filtriert wird, um die Partikel zu separieren und nachfolgend zu analysieren. Die Partikel können jedoch auch innerhalb der Flüssigkeit analysiert werden, die zu diesem Zweck durch einen Flüssigkeitspartikelzähler gepumpt wird, so dass die Lichtstreuung an den Partikeln innerhalb der Flüssigkeit gemessen werden kann. Hierbei bestehen jedoch Nachteile darin, dass das Bauteil selbst zu einem derartigen Spülkabinett gebracht werden muss, das selbst äußerst sauber sein muss. Dieses Verfahren setzt eine Verträglichkeit mit flüssigen Medien wie Alkohol oder Reinstwasser voraus. Die Ergebnisse werden negativ beeinflusst durch Luft- oder GasBlasen in der Flüssigkeit oder unterschiedliche Reflektivität der Partikel je nach Oberfläche, Größe, Material und Orientierung. Die exakte Bestimmung der beprobten Oberfläche ist schwierig.

Es gibt darüber hinaus Größenbeschränkungen wegen der Handhabung des Bauteils, die Auswertung unter dem Mikroskop ist vergleichsweise teuer, und weitere Messungen sind beispielsweise beim Filtrieren nicht möglich, da die Partikel im Filter gebunden sind. Schließlich zerstört die Messung den Kontaminationszustand, so dass weitere Analysen nicht möglich sind. Eine Auswertung der räumlichen Struktur der Partikel ist nicht möglich da die Partikel sich im Filtermedium befinden und der hell-dunkel-Kontrast aufgenommen wird (z.B. Plättchen Verunreinigung senkrecht betrachtet). Die Methode ist ebenfalls limitiert falls die Teilchenzahl zu groß wird, es sich um helle Teilchen auf weißem Filtermedium handelt oder die Teilchen zu klein werden. Die Orientierung der Teilchen im Filter oder Flüssigkeit gibt die tatsächliche Größe falsch wieder.

Insbesondere im Bereich der Raumfahrt ist ein sog. PFO-Meter üblich, dem eine saubere Referenzplatte ausgelegt und nach einer definierten Zeit analysiert wird. Hierbei werden auf einem vergleichsweise kleinen Messfleck die Streulichteigenschaft mittels einer Kamera aufgenommen, und hierdurch der Bedeckungsgrad mit Partikeln bestimmt. Hierbei können jedoch keine Rohdaten gespeichert werden, der Messfleck ist äußerst klein, und die bekannten Referenzplatten können dennoch nicht in irgendwie gearteter Hardware eingebaut, sondern nur ausgelegt werden. Schließlich ist das Messgerät selbst vergleichsweise teuer und erfüllt nur die spezielle Messaufgabe. Das Messverfahren selbst ist wenig robust, da beispielsweise bei einem Herausbewegen eines Teilchens aus dem extrem kleinen Messfeld vollständig veränderte Ergebnisse erhalten werden, und Messungen sind aufgrund des äußerst kleinen Messflecks schwierig zu wiederholen.

Durch die Auswertung des hellen Streulichtes gehen viele Informationen über Oberflächenbeschaffenheit, tatsächliche Form und Randbeschaffenheit der Partikel verloren. Durch die Gefahr beim Transport des Samples den Messwert zu verändern ergeben sich Probleme bei der Kalibrierung und Vergleich von Messwerten. Die Anwendung ist auf die Verwendung mit PFO-Plates (Geometrie, Oberfläche, Messfläche, Befestigung) eingeschränkt.

US 2005/266415 A1 offenbart ein Verfahren zur Probenahme einer gasgetragenen Probe, bei der eine Vorrichtung verwendet wird, die einen Einlass, einen Auslass, und eine Folie aufweist, die angrenzend an den Einlass angeordnet ist.

US 2005/0214745 A1 offenbart eine Vorrichtung zum Sammeln lebensfähiger, gasgetragener Stoffe. Die Vorrichtung weist einen Einlass und einen Auslass auf, sowie eine Platte, die zwischen dem Einlass und dem Auslass angeordnet ist. Eine Fläche der Platte weist eine Substanz auf, die die dazu ausgebildet ist, die lebensfähigen Stoffe im Lebendzustand zu halten, ohne deren Wachstum zu fördern.

WO 2007/009863 A2 offenbart einen Objektträger mit einem Etikettbereich, der dazu ausgebildet ist, ein Etikett aufzunehmen, und mit einem Abdeckglasbereich, der dazu ausgebildet ist, ein Beobachtungsobjekt und ein Abdeckglas aufzunehmen. Zwischen dem Etikettbereich und dem Abdeckglasbereich ist eine Positionsreferezmarke angeordnet.

Weitere Vorrichtungen und Verfahren sind ferner aus US 5,412,221 A, US 5,870,186 A, US 6,122,053 A, US 2008/0297798 A1, US 5,635,403 A, US 5,271,264 A und US 2003/0235926 A1 bekannt.

### Darstellung der Erfindung

Vor diesem Hintergrund liegt der Erfindung die Aufgabe zugrunde, eine verbesserte Probe für die Partikelmessung, einen Behälter hierfür sowie ein verbessertes Verfahren zur Partikelmessung zu schaffen.

Im Hinblick auf die Probe erfolgt die Lösung dieser Aufgabe durch den Gegenstand des Patentanspruchs 1.

Demzufolge weist die erfindungsgemäße Probe ein Gehäuse mit einer durchgehenden Öffnung auf, in der ein Glassubstrat mit Markierungen aufgenommen ist. Die Markierungen, die zur Fokussierung eines Mikroskops dienen, sind dabei mittels eines lithographischen Verfahrens aufgebracht und weisen keine Vertiefungen auf. Das Gehäuse ermöglicht zunächst eine sichere Handhabung der Probe und darüber hinaus eine Befestigung in einem Bauteil oder einem größeren Produkt, wie z.B. einem Satelliten und die wiederholbare Befestigung im Auswertemikroskop. Entscheidend ist, dass die Probe sowie deren Handhabung zu keiner Zeit einen negativen Einfluss auf die Partikelmessung nimmt. Durch das gemäß der Erfindung vorgesehene Glas ist die Analyse der Partikel mittels eines Durchlichtverfahrens und insbesondere scannenden Verfahrens unter beliebigen optischen Erfassungssystemen wie zum Beispiel Lichtmikroskopen, möglich. Die Markierungen ermöglichen hierbei eine Fokussierung des Mikroskops, sowie zumindest optional eine Eingrenzung des Messbereichs. Somit können Partikelgrößen und Verteilungen automatisiert, nämlich durch Bildanalyse des sich ergebenden Mikroskopbildes (Mikroskopbilder als Mosaik) analysiert werden, und jegliche Zustände können abgespeichert werden. Beispielsweise kann die Probe als Referenzprobe (für Vergleichsmessungen) verwendet werden, indem ein erster Zustand, bei dem es sich beispielsweise um einen Ausgangszustand handelt, analysiert wird, und nach einer gewissen Zeit ein zweiter Zustand analysiert wird, so dass sich die dazwischen erfolgte Kontamination in Wesentlichen durch Subtraktion des ersten von dem zweiten Zustand ergibt. Insbesondere können in vorteilhafter Weise einzelne, wieder erkannte Teilchen abgezogen werden. Ebenfalls kann nun der zeitliche Verlauf von Kontamination erfasst werden.

Diese Technologie ermöglicht nun erstmals die Erstellung und Anwendung eines Partikelnormals hinsichtlich Größen- und Farbverteilung.

Ferner zerstört das erfindungsgemäße Verfahren den Kontaminationszustand nicht und kann somit in vorteilhafter Weise für die Forschung nach den Ursachen der Kontamination und zur Untersuchung von Reinigungsmethoden verwendet werden. Beispielsweise können im Rahmen der erfindungsgemäßen Auswertung Partikel von Fasern unterschieden werden. Mittels des verwendeten Durchlichtverfahrens werden darüber hinaus Störgrößen, wie zum Beispiel externe Beleuchtung und sich ändernde Beleuchtungsverhältnisse in großem Umfang reduziert. Im weiteren Unterschied zu einem Streulichtverfahren ist darüber hinaus die Entstehung von Schattenbildern und Abbildungsfehlern ausgeschlossen. Die Markierungen können darüber hinaus in vorteilhafter Weise dazu verwendet werden, Parameter, wie beispielsweise Helligkeitseinstellungen abzugleichen, da sich die Markierungen nicht verändern. Die Probe kann auch als exponier- und extrahierbare Prüffläche bezeichnet werden und ist durch Aufnahme des Glases in der Öffnung des Gehäuses so vorgesehen, dass während der Handhabung eine weitere Kontamination oder eine Verfälschung des zu analysierenden Zustandes ausgeschlossen ist. In der beigefügten Zeichnung ist die Prüffläche des Glases in der Größe dahingehend optimiert dargestellt, dass eine maximale Messfläche gegenüber einer Minimierung des störenden Einbauvolumens im Instrument garantiert wird. Tatsächlich ist jedoch die einzige Einschränkung der Samplefläche der Verfahrweg des X,Y Tisches des Mikroskopes sowie ein ca. 1 mm Rand vom Glashalter um Randeffekte bei der Bildverarbeitung durch Lichtbrechung an den Begrenzungskanten beim Durchlicht zu vermeiden.

Zu diesem Zweck befindet sich das Glas in einer gewissen Entfernung, beispielsweise mindestens 1mm, von zumindest einem Öffnungsrand, mit anderen Worten dem Ende Öffnung an einer Oberfläche des Gehäuses.

Dadurch, dass der Kontaminationszustand unmittelbar im Durchlichtverfahren gemessen werden kann, sind Verfälschungen ausgeschlossen, und es sind jederzeit weitere Messungen möglich. Diese sind darüber hinaus vergleichsweise kostengünstig durchzuführen, die Verwendung der Probe verändert die beprobte Oberfläche nicht, und die erfindungsgemäße Probe lässt sich mit vergleichsweise geringem Platzbedarf realisieren. Eine Archivierung der Proben und Vergleichsmessungen an der Probe sind möglich.

Darüber hinaus hat sich herausgestellt, dass mittels der erfindungsgemäßen Probe Partikel bis in den Bereich von µm (abhängig vom verwendeten Mikroskop auch unterhalb von µm) erfasst und analysiert werden können. Es können ferner auch sehr kleine Kontaminationswerte, bis unter 1 ppm erfasst werden (ppm als parts per million stellt die Summe der gemessenen Partikelfläche bezogen auf 1 m² dar). In vorteilhafter Weise ist dadurch häufig die Quelle der Kontamination zu ermitteln. Hieraus können Maßnahmen für die zukünftige Verhinderung der Kontamination abgeleitet werden. Ferner kann eine vergleichsweise große Messfläche realisiert werden. Beispielsweise sind Messflächen von 14 cm² realisiert worden (Grundsätzlich ist jedoch eine Größe bis zum Verfahrweg des x, y Tisches, beispielsweise 20 mal 30 cm möglich).

Jegliche Messungen können ferner in vorteilhafter Weise beispielsweise durch spülende Verfahren überprüft werden. Im Rahmen des erfindungsgemäßen Verfahrens können bereits vorhandene Mikroskope genutzt werden, sodass sich die notwendigen Investitionen in Grenzen halten.

Es sei nochmals betont, dass sich die Erfindung nicht nur "negativ" einsetzen lässt, um Kontamination zu messen und zu charakterisieren. Vielmehr ist auch ein "positiver" Einsatz möglich, beispielsweise bei der Qualitätssicherung von Ausgangsmaterialien beim 3D-Druck. Hierbei können Größenteilung und Form des Granulats auf einem Objektträger vermessen werden und Teilchen in der Größenordnung von 100 µm erfasst werden. Auch die Überprüfung eines 2D-Druckergebnisses ist in vorteilhafter Weise möglich. Bevorzugte Weiterbildungen der erfindungsgemäßen Probe sind in den weiteren Ansprüchen beschrieben.

Für ein zuverlässiges Messergebnis hat sich die Verwendung von Waferglas als vorteilhaft erwiesen, da derartige Gläser eine vergleichsweise geringe Welligkeit sowie eine geringe Anzahl an Defekten und Fehlstellen aufweisen. Besonders bevorzugt wird derzeit ein Glas des Typs D263 ^{®} T eco thin, das bei der Firma Schott erhältlich ist. Hierbei handelt es sich um ein durchsichtiges, klares Borsilikatglas, das sich durch hohe chemische Beständigkeit auszeichnet, was sowohl für den Reinigungsprozess als auch das Beschichtungsverfahren für die Aufbringung der Markierungen äußert vorteilhaft ist. Das Glas wird in einem Down-Draw-Verfahren erzeugt und kann als Glaswafer mit einer Dicke von beispielsweise 1,1 mm und einem Durchmesser von 200 mm bezogen werden. Im Rahmen der Herstellung werden die Glaswafer bevorzugt gereinigt, mit den Markierungen beschichtet, nachfolgend auf das erforderliche Maß geschnitten, entgratet und nochmals gereinigt.

Besonders vorteilhaft für die erfindungsgemäße Anwendung ist eine Welligkeit des Glases, bei der die obere und/oder untere Fläche desselben von einer idealen Oberfläche um weniger als 0,05 mm abweicht. Gleiches gilt für die Abweichungen zwischen Ober- und Unterseite im Hinblick auf die Parallelität. Die Parallelität des Glases ist entscheidend, um die Krafteinwirkung bei Verschrauben des Glases im Rahmen und beim Verschrauben der Probe, "des Samples", auf der zu prüfenden Hardware gleichmäßig zu verteilen. Auch bei Stößen während der Handhabung und des Transportes ist eine gleiche Kraftübertragung ohne Spannungsspitzen wichtig, um ein Brechen des Glases zu vermeiden. Entscheidend ist hierbei die Krafteinleitung an den Führungskanten.

Aus dem gleichen Grund und für die Genauigkeit der Ergebnisse wird derzeit für Defekte und Fehlstellen in dem verwendeten Glas als günstig angesehen, wenn diese weniger als 0,1 ppm der Oberfläche der oberen und/oder unteren Fläche des Glases und/oder im Glas selbst einnehmen. Mit anderen Worten muss diese Grundreinheit an Oberflächenkratzern, Verunreinigungen und Schäden auf und im Glas im Messbereich vorzugsweise unterhalb von 0.1 ppm liegen.

Um das Glas bezüglich des Gehäuses fest zu fixieren, und an dieser Schnittstelle sowohl Bewegungen als auch Schwingungen zu verhindern, ist gemäß einer bevorzugte Ausführungsform zwischen dem Glas und einer inneren Umfangsfläche der Öffnung ein Rahmen vorgesehen, der sich zumindest teilweise um den Umfangsrand des Glases erstrecken kann und beispielsweise aus einen Polymer insbesondere Teflon (PTFE) ausgeführt sein kann. Hinsichtlich thermischer Spannungen ist die Befestigung auf 1 kg ausgelegt.

Dem gegenüber ist eine weitere bevorzugte Ausführungsform etwas kostengünstiger, bei der das Glas in die Öffnung geklebt werden kann, hierbei kann das Gehäuse beispielsweise aus Edelstahl ausgeführt sein, und als Klebstoff kann Raumfahrtkleber verwendet werden.

Insbesondere bei der Ausführungsform mit einem Rahmen zwischen Glas und Gehäuse kann das Gehäuse zweiteilig ausgeführt sein und das Glas kann zwischen den beiden Gehäuseteilen gehalten werden. Das Gehäuse und/oder der Rahmen können somit ein Ober- und ein Unterteil aufweisen, die aneinander befestigbar sind und zueinander komplementäre Konturen aufweisen können.

Allgemein kann das Gehäuse auch aus Aluminium, insbesondere eloxiert ausgeführt und/oder rot eingefärbt sein. Dies ist notwendig um Kontamination durch Abrieb von chemischen Reaktionen zwischen Aluminium und Luftsauerstoff auszuschließen. Zusätzlich zeigt beispielsweise bei Raumfahrtanwendungen an, dass die Probe vor dem Start zu entfernen ist. Hierbei kann in vorteilhafter Weise eine Beschichtung eingesetzt werden, die weder chemische noch partikulare Kontamination verursacht und darüber hinaus für die Raumfahrt qualifiziert ist. Gleichzeitig sind sämtliche der genannten Ausführungsformen und Materialien mit dem zu erwartenden partikularen und molekularen Kontaminationsrisiken und mit Temperaturen bis zu 200°C, kryogene Temperaturen bis -100°C und Vakuumanwendungen kompatibel.

Für die Befestigung in einer Umgebung, wie zum Beispiel einem Satelliten, einem Modul, oder Bauteil davon, weist die erfindungsgemäße Probe in vorteilhafter Weise zumindest eine Befestigungseinrichtung, wie beispielsweise zumindest eine Öffnung für eine Schraube auf. Eine oder mehrere Schrauben können unverlierbar in den Öffnungen vorgesehen sein und können beispielsweise im Bereich des Kopfes einige abgedrehte Gewindegänge aufweisen, sodass sie im Bereich dieser abgedrehten Gewindegänge lose beweglich in den Öffnungen aufgenommen sind, und mit den verbleibenden Gewindegängen in ein Instrument oder dergleichen eingeschraubt werden können.

Insbesondere wird derzeit eine Form bevorzugt, bei der das Gehäuse im Wesentlichen in der Draufsicht rechteckig und dreidimensional betrachtet im Wesentlichen quaderförmig, bevorzugt mit abgerundeten Ecken und/oder Kanten ausgeführt ist und Schrauböffnungen in wenigstens zwei diagonal gegenüberliegenden Öffnungen vorgesehen sind.

Bei einer erfindungsgemäßen Probe sind die Markierungen mittels eines lithographischen Verfahrens aufgebracht. Hierdurch kann in vorteilhafter Weise die erforderliche Genauigkeit erreicht werden, sodass die Markierungen in vorteilhafter Weise im Rahmen der Auswertung beispielsweise in einem Lichtmikroskop verwendet werden können. Dies äußert sich beispielsweise darin, dass parallel vorgesehene Linien allenfalls um deutlich weniger als 1 µm von einer völlig parallelen Ausrichtung abweichen. Jegliche Ecken der Markierungen sind äußerst "scharf" ausgeführt, mit anderen Worten haben sie keinen Krümmungsradius.

Ein lithographisches Verfahren bietet gegenüber einem Ätzverfahren oder der Verwendung eines Lasers den Vorteil, dass Vertiefungen vermieden werden können, in denen sich Teilchen sammeln können. Es kommt hierbei zu keinerlei Schädigungen /Schwächungen des Materials. Die bekannte Höhe der Kreuze kann verwendet werden, um die ideale Analyseebene des Mikroskops auf die gesuchte Objekthöhe (auch unterhalb von 1 µm) einzustellen.

Die bekannte Reflektivität (als reflektierender Chrom bei 550 nm Licht von >3, optische Dichte und Reflexion >40 % luftseitig) der Markierungen wird verwendet um die Einstellungen des Mikroskops zu prüfen und notfalls beispielsweise wegen veränderter Lichtverhältnisse zu korrigieren. Ebenfalls können hierbei zeitliche Veränderungen zum Beispiel am Mikroskop angezeigt werden. Beides verbessert signifikant das Vertrauensniveau in ein Standardverfahren der Qualitätssicherung.

Mit Hinblick auf die Markierungen wird derzeit ferner bevorzugt, dass diese zumindest teilweise Kreuz- oder T-förmig ausgeführt sind, und/oder durch vier Markierungen ein rechteckiger Messbereich definiert wird. Entlang der Ränder des Messbereichs können zusätzliche Markierungen vorgesehen sein, die beispielsweise als Koordinaten zum Zuordnen von Defekten und Objekte verwendet werden können. Kreuze mit einem präzisen rechten Winkel dazwischen legen in vorteilhafter Weise die Verfahrwege eines Tisches bezüglich eines Mikroskops in x- und y-Richtung fest. T-förmige Markierungen können beispielsweise dazu verwendet werden, eine notwendige Ausrichtung für den richtigen Einbau in den Halter zu garantieren (beispielsweise müssen die Markierungen nach oben zeigen). Die Linien, welche die Kreuze oder T-förmigen Markierungen bilden, können beispielsweise zwischen 40 und 70 µm dick sein.

Um neben der partikularen Kontamination auch molekulare Kontaminationen, an derselben Stelle und zur selben Zeit messen zu können, ist gemäß einer bevorzugten Ausführungsform eine zweite, sich in dem Gehäuse von der Ober- zur Unterseite erstreckende Öffnung vorgesehen, die ein im Wesentlichen ebenes Glassubstrat aufnimmt, das zur Erfassung der molekulare Kontamination geeignet ist. Im Gegensatz zu dem vorangehend beschriebenen Glassubstrat kann dieses im Wesentlichen rund ausgeführt sein. Die vorangehend im Hinblick auf das Glassubstrat für Erfassung der partikularen Kontamination genannten (bevorzugten) Merkmale sind gleichermaßen auf das Glassubstrat zur Erfassung der molekularen Kontamination anwendbar, wenngleich derzeit für das Glassubstrat zur Erfassung der molekularen Kontamination bevorzugt wird, dass es ein ZnS-Kristall ist. Dies bietet Vorteile, exemplarisch gegenüber dem aktuellen Raumfahrtstandard dahingehend, dass es weniger brüchig, nicht giftig und nicht hygroskopisch ist. Ferner kann es in einfacher Weise mit Wasser gereinigt werden. In vorteilhafter Weise kann das zweite Glas, als B-Probe auch zur Kontrolle des Ergebnisses auf dem ersten Glas verwendet werden und umgekehrt.

Ein erfindungsgemäßer Behälter mit einer erfindungsgemäßen Probe ist im Anspruch 11 beschrieben und ist in vorteilhafter Weise dahingehend optimiert, dass das eingeschlossene Volumen minimiert ist, und der Behälter ohne gesonderte Dichtungen chemisch dicht ausgeführt werden kann. Hierdurch wird eine Übertragung sowohl von partikularer als auch molekularer Kontamination ausgeschlossen, was auch bei Temperaturen bis zu 50°C gewährleistet werden kann. Der geschlossene Transportbehälter kann von einer Folie umschlossen sein.

Die chemische Dichtigkeit kann besonders zuverlässig durch ebene Flächen realisiert werden, im verschlossenen Zustand aneinander anliegen.

Im Hinblick auf das Material des Behälters hat sich Verwendung eines Polymers, insbesondere Teflon (PTFE) als vorteilhaft erwiesen, da bei einem derartigen Material kein Abrieb zu befürchten ist. Ferner kann dieses äußert glatt ausgeführt werden, sodass auch dann, wenn sich Kontamination von der Probe gelöst hat, die Möglichkeit besteht, diese in der Umgebung der Probe in dem Behälter zu finden. Schließlich kann ein Behälter aus den genannten Materialien auf hochreinen Maschinen ohne den Einsatz von Schmierstoffen hergestellt werden, was für die vorliegende Verwendung des Behälters äußert vorteilhaft ist.

Ein erfindungsgemäßes Verfahren zur Partikelmessung mit einer erfindungsgemäßen Probe ist im Anspruch 14 beschrieben und gewährleistet eine detaillierte Messung und Auswertbarkeit der partikularen Kontamination. In vorteilhafter Weise können an dem verwendeten Mikroskop Konturen, wie z.B. ein Aufnahmerahmen vorgesehen sein, die eine Halterung der Probe in stets derselben Konfiguration und Position sicherstellen. Hierbei können insbesondere Bedeckungsgrade, Größenverteilungen und Übersichtskarten inkl. örtlicher Verteilungen erstellt werden, und bei entsprechenden Anwendungsfällen können Partikel beispielsweise aufgrund ihrer Form und/oder Fläche sowie deren Koordinaten wiedererkannt werden. Dies ist durch die Verwendung geeigneter modifizierter Software insbesondere auch dann möglich, wenn sich der Ort von Partikeln, beispielsweise durch den Transport, leicht verschoben haben. Zur Lokalisierung von Kontaminationsquellen ist die Darstellung der örtlichen Verteilung und der Größenverteilung mittels Software und den Markierungen umgesetzt worden.

Aus diesem Grund wird im Rahmen des erfindungsgemäßen Verfahrens bevorzugt, die Partikel durch digitale Bildauswertung zu erfassen und optische Daten zu erstellen. Beim Starten der entsprechenden Auswertungssoftware werden die Mikroskopeinstellungen vorteilhafterweise automatisch reproduziert, und auf die kritischen Parameter kann durch einen Bediener kein Einfluss genommen werden. Es ist lediglich üblicherweise eine Eingabemaske für Kenngrößen, wie beispielsweise die Zuordnung des Berichtes zur Nullmessung und zur eigentlichen Messung vorgesehen. Dies ermöglicht die Erstellung von standardisierten reproduzierbaren Qualitätsberichten.

Bevorzugt kommt bei dem erfindungsgemäßen Verfahren der oben beschriebenen Behälter zum Einsatz, mittels dessen die Probe von ihrem Einsatzort zu dem Analyseort transportiert wird.

Im Rahmen der Auswertung mittels eines Lichtverfahrens kann es vorteilhaft sein, mittels der oben beschriebenen Markierungen die Fokussierung des Mikroskops fortlaufend zu aktualisieren.

Ein erfindungsgemäßes Verfahren bietet ferner die Möglichkeit, die Entwicklung zwischen zwei Messungen zu analysieren, indem eine Anfangsmessung vorgenommen, und die optische Auswertung derselben abgespeichert wird, nach einiger Zeit eine weitere Messung vorgenommen und das Messergebnis analysiert wird, und die Differenz zwischen den beiden Messungen im Wesentlichen charakteristisch für die Ereignisse zwischen den beiden Messungen ist. In vorteilhafter Weise wird hierbei im Wesentlichen die erste von der zweiten Messung abgezogen.

Es sei ferner darauf hingewiesen, dass sämtliche im Zusammenhang mit dem Verfahren und dem Behälter voranstehend und nachfolgend erwähnten Merkmale auf den Behälter bzw. das Verfahren sowie auf die Probe anwendbar sind und umgekehrt.

### Kurze Beschreibung der Zeichnungen

Nachfolgend wird ein bevorzugtes Ausführungsbeispiel der Erfindung unter Bezugnahme auf die Zeichnungen erläutert. Es zeigen:
Figur 1 eine perspektivische Ansicht einer erfindungsgemäßen Probe;
Figur 2 eine perspektivische Schnittansicht der in Figur 1 gezeigten Probe;
Figur 3 eine Draufsicht des Glassubstrats der in Figuren 1 und 2 gezeigten Probe;
Figur 4 eine Ansicht einer Markierung auf dem in Figur 3 gezeigten Glassubstrat;
Figur 5 eine perspektivische Ansicht eines erfindungsgemäßen Probenbehälters.

### Ausführliche Beschreibung einer bevorzugten Ausführungsform der Erfindung

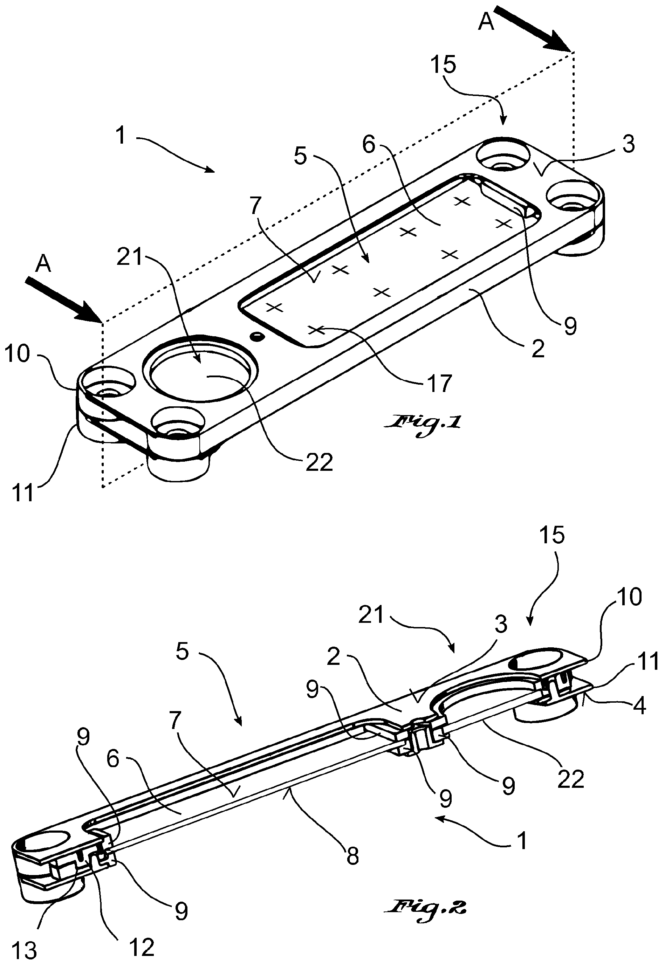

Wie in Figur 1 zu erkennen ist, weist die erfindungsgemäße Probe 1 ein Gehäuse 2 mit einer Oberseite 3 und einer (in Figur 1 nicht zu erkennenden) Unterseite 4 auf. Zwischen Ober- und Unterseite sind im gezeigten Fall zwei Öffnungen 5, 21 ausgebildet, in denen jeweils Glassubstrate 6, 22 aufgenommen sind. Das Glassubstrat 6 dient im gezeigten Fall der Partikelmessung, ist im Wesentlichen rechteckig, weist eine Oberseite 7 und eine lediglich in Figur 2 zu erkennende Unterseite 8 auf und ist mit Markierungen 17 versehen, die einen im Wesentlichen rechteckigen Messbereich begrenzen. Das zweite Substrat 22 dient der Messung der molekularen Kontamination und ist in dem gezeigten Fall im Wesentlichen kreisförmig mit einem Durchmesser der im Wesentlichen der Länge der kürzeren Seite des ersten Glassubstrats 6 entspricht. Die Probe kann insgesamt eine Länge von etwa 140 eine Breite von etwa 36 und eine Höhe von etwa 12 mm aufweisen und ist somit vergleichsweise klein und einfach zu handhaben. Der Ausschnitt für das erste Glassubstrat 6 kann beispielsweise etwa 76x26 mm groß sein.

Wie ebenfalls in Figur 1 zu erkennen ist, sind in dem gezeigten Fall an sämtlichen Ecken des Gehäuses 2 Schrauböffnungen 15 vorgesehen, und die Seitenkanten des Gehäuses sind abgerundet.

Wie genauer aus Figur 2 hervorgeht, ist das Gehäuse 2 in dem gezeigten Fall zweiteilig, mit einem Ober- 10 und einem Unterteil 11 ausgeführt. Die gezeigte Ausführungsform weist ferner einen um das jeweilige Glassubstrat 6, 22 umlaufenden Rahmen 9 auf, der zwischen Ober- 10 und Unterteil 11 mit Spiralfedern auf eine Befestigung von 1 kg eingeklemmt ist. Ein hierbei an dem Oberteil des Rahmens ausgebildeter Vorsprung 12 ist in einer in dem Unterteil des Rahmens ausgebildeten Vertiefung 13 aufgenommen.

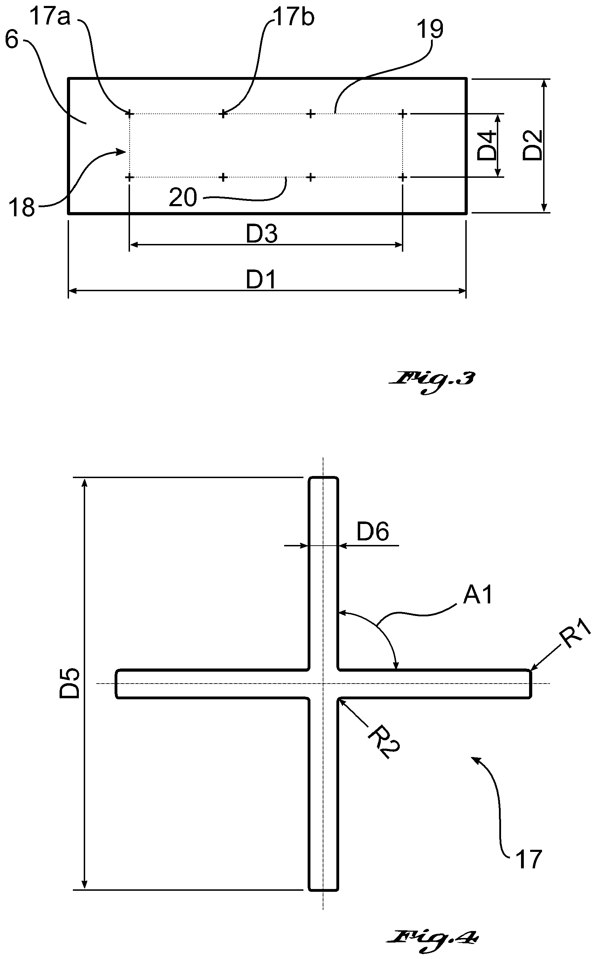

In Figur 3 ist das erste Glassubstrat 6 mit ersten Markierungen 17a zu erkennen, die den Messbereich markieren und an der langen Seite 50 bis 55, insbesondere 52 mm voneinander entfernt sein können (Abstand D3), und an der kurzen Seite um einen Abstand D4 von 10 bis 14, insbesondere 12 mm voneinander entfernt sein können. Das Glassubstrat insgesamt kann Abmessungen D1, D2 von 70 bis 80, insbesondere in etwa 76 und 24 bis 28, insbesondere etwa 26 mm aufweisen. In Figur 3 sind ferner zweite Markierungen 17b, in dem gezeigten Fall entlang der langen Seiten 19, 20 zu erkennen, die beispielsweise als Koordinaten dienen.

In Figur 4 ist eine einzelne Markierung 17 in Form eines rechtwinkligen (A1=90°) Kreuzes, beispielsweise mit einer Abmessung D5 von 0,4 bis 0,6, insbesondere etwa 0,5 mm dargestellt. Die Dicke D6 beträgt zwischen 40 und 70, beispielsweise etwa 60 µm, und die Radien R1, R2 an den Ecken sind äußerst klein, insbesondere kleiner als 5 um.

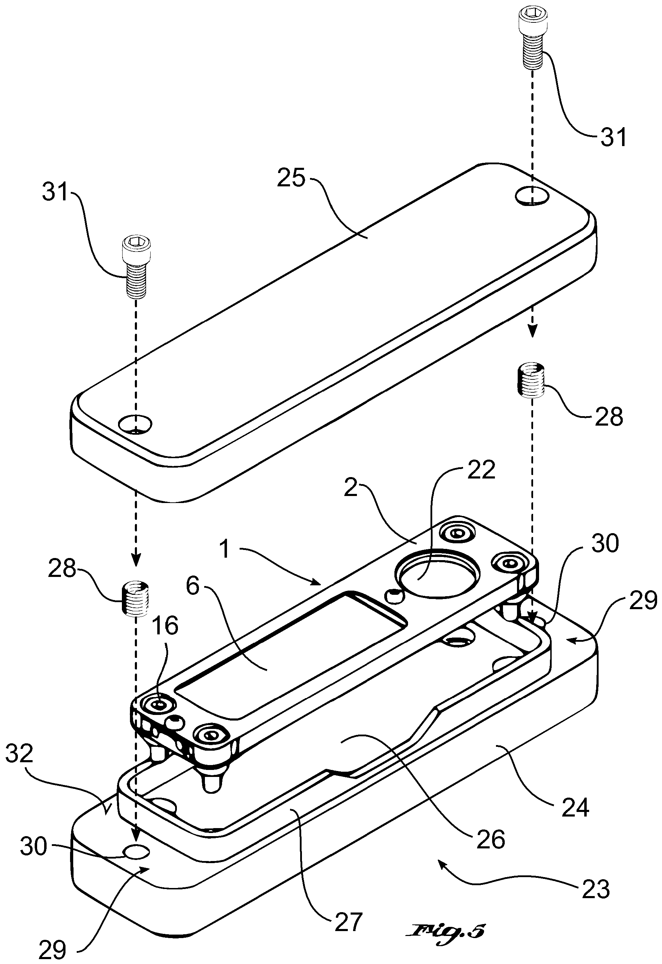

In Figur 5 ist schließlich ein erfindungsgemäßer Transportbehälter 23 mit einer Probe 1 dargestellt, die in diesem Fall unverlierbar vorgesehene Schrauben 16 aufweist. Der Behälter 23 weist ein Unterteil 24 und eine Abdeckung 25 auf, die dazwischen einen Hohlraum 26 definieren. In dem gezeigten Fall ist an dem Unterteil 24 ein Steg 27 vorgesehen, innerhalb dessen die Probe 1 aufnehmbar ist. Mit dazwischen angeordneten Einschraubgewinden (Helicoils) 28 ist die Abdeckung 25 mittels Schrauben 31 mit dem Unterteil 24 derart verschraubbar, dass der untere Rand der Abdeckung 25 auf einer ebenen Fläche 32 am Umfang 29 des Unterteils 24 aufliegt und abdichtet. Im geschlossenen Zustand treten die Schrauben 31 in Schrauböffnungen 30 ein.

## Patentansprüche

1. Probe (1) ausgeführt zur Partikelmessung mit
einem Gehäuse (2), das eine Ober- (3) und eine Unterseite (4) aufweist, durch die sich zumindest eine durchgehende Öffnung (5) erstreckt, und
zumindest einem Glassubstrat (6, 22) mit Markierungen (17) zur Fokussierung eines Mikroskops,
wobei
das Glassubstrat (6, 22) in der Öffnung (5) aufgenommen ist,
wobei die Markierungen (17) mittels eines lithographischen Verfahrens aufgebracht sind und keine Vertiefungen aufweisen.

2. Probe nach Anspruch 1, **dadurch gekennzeichnet, dass** das Glassubstrat (6, 22) aus einem Waferglas, ausgeführt ist.

3. Probe nach Anspruch 1 oder 2, **dadurch gekennzeichnet, dass** das Glassubstrat (6, 22) eine Ober- (7) und eine Unterseite (8) aufweist, und zumindest eine Seite von einer ideal ebenen Fläche um weniger als 0,05 mm abweicht.

4. Probe nach einem der vorangehenden Ansprüche, **dadurch gekennzeichnet, dass** Fehlstellen und/oder Defekte weniger als 0,1 ppm der Oberfläche der Ober- (7) oder der Unterseite (8) und/oder im Glas selbst des Glassubstrats (6, 22) einnehmen.

5. Probe nach einem der vorangehenden Ansprüche, ferner mit wenigstens einem Rahmen (9), der den Umfangsrand des Glassubstrats (6, 22) zumindest teilweise umgibt und in der Öffnung (5, 21) aufgenommen ist.

6. Probe nach Anspruch 5, **dadurch gekennzeichnet, dass** zumindest ein Rahmen (9) aus einem Polymer, insbesondere PTFE ausgeführt ist.

7. Probe nach einem der vorangehenden Ansprüche, ferner mit einem Klebstoff, der zwischen dem Glassubstrat (6, 22) und dem Gehäuse (2) und/oder dem Rahmen (9) vorgesehen ist.

8. Probe nach einem der vorangehenden Ansprüche, **dadurch gekennzeichnet, dass** das Gehäuse (2) und/oder der Rahmen ein Ober- (10) und ein Unterteil (11) aufweist, die aneinander befestigbar sind und zueinander komplementäre Konturen (12, 13) aufweisen.

9. Probe nach einem der vorangehenden Ansprüche, ferner mit zumindest einer Befestigungseinrichtung, wie z.B. einer Schrauböffnung (15), wobei bevorzugt zwei Schrauböffnungen an zwei entgegengesetzten Ecken des Gehäuses (2) vorgesehen ist.

10. Probe nach einem der vorangehenden Ansprüche, **dadurch gekennzeichnet, dass** das Glassubstrat (22) zur Erfassung der molekularen Kontamination geeignet ist, wobei dieses Glassubstrat bevorzugt als ZnS-Kristall ausgeführt ist.

11. Behälter (4) mit einer Probe zur Partikelmessung gemäß einem der vorangehenden Ansprüche, mit einem Unterteil (24) und einer Abdeckung (25), die dicht verbindbar sind und dazwischen einen Hohlraum zur Aufnahme der Probe (1) definieren.

12. Behälter nach Anspruch 11, **dadurch gekennzeichnet, dass** das Unterteil (24) und die Abdeckung (25) ebene Flächen (32) aufweisen, die in geschlossenem Zustand aneinander anliegen.

13. Behälter nach Anspruch 11 oder 12, **dadurch gekennzeichnet, dass** das Unterteil (24) und/oder die Abdeckung (25) aus einem Polymer, insbesondere PTFE ausgeführt sind.

14. Verfahren zur Partikelmessung mit folgenden Schritten:
Anbringen einer Probe gemäß einem der Ansprüche 1 bis 10 an einem Ort, an dem die partikulare Kontamination gemessen werden soll;
Sammeln von Partikeln an einem transparenten Glassubstrat der Probe für eine bestimmte Zeitdauer;
Entfernen der Probe von dem Ort;
Platzieren der Probe in einem Durchlicht-Mikroskop;
Fokussieren des Mikroskops auf die Oberseite (7) des Glassubstrats mittels Markierungen an dem Glassubstrat;
Erfassen der partikularen Kontamination mittels eines Durchlichtverfahrens.

15. Verfahren zur Partikelmessung nach Anspruch 14 ferner mit dem Schritt der Erstellung optischer Daten und bevorzugt des Klassifizierens von Partikeln mittels der optischen Daten.

16. Verfahren zur Partikelmessung nach Anspruch 14 oder 15 ferner mit dem Schritt des Transportierens der Probe von dem Ort zu dem Mikroskop mittels eines Behälters, vorzugsweise des Behälters gemäß einem der Ansprüche 11 bis 13.

17. Verfahren zur Partikelmessung nach einem der Ansprüche 14 bis 16 ferner mit dem fortlaufenden Fokussieren anhand der Markierungen an dem Glassubstrat.

18. Verfahren zur Partikelmessung nach einem der Ansprüche 14 bis 17 ferner mit einer ersten Messung, um einen ersten Zustand zu erfassen, und einer nach einer bestimmten Zeitdauer durchgeführten zweiten Messung, um einen zweiten Zustand zu erfassen, und dem Schritt der Bildung der Differenz zwischen dem zweiten und dem ersten Zustand, um die dazwischen erfolge Kontamination zu ermitteln.

## Claims

1. Sample (1) designed for measuring particles with
a housing (2) having an upper (3) and a lower side (4) through which at least one continuous opening (5) extends, and
at least one glass substrate (6, 22) with markings (17) for focusing a microscope,
wherein the glass substrate (6, 22) is accommodated in the opening (5),
wherein the markings (17) are applied by means of a lithographic process and have no indentations.

2. Sample according to claim 1, **characterised in that** the glass substrate (6, 22) is made of a wafer glass.

3. Sample according to claim 1 or 2, **characterised in that** the glass substrate (6, 22) has an upper (7) and a lower side (8), and at least one side deviates from an ideally flat surface by less than 0.05 mm.

4. Sample according to one of the preceding claims, **characterised in that** flaws and/or defects occupy less than 0.1 ppm of the surface of the upper (7) or lower side (8) and/or in the actual glass of the glass substrate (6, 22).

5. Sample according to one of the preceding claims, further comprising at least one frame (9) which at least partially surrounds the circumferential edge of the glass substrate (6, 22) and is incorporated into the opening (5, 21) .

6. Sample according to claim 5, **characterised in that** at least one frame (9) is made of a polymer, in particular PTFE.

7. Sample according to one of the preceding claims, further comprising an adhesive provided between the glass substrate (6, 22) and the housing (2) and/or the frame (9).

8. Sample according to one of the preceding claims, **characterised in that** the housing (2) and/or the frame has an upper (10) and a lower part (11) which can be fastened to each other and have complementary contours (12, 13).

9. Sample according to one of the preceding claims, further comprising at least one fastening device, for example a screw opening (15), wherein preferably two screw openings are provided at two opposite corners of the housing (2).

10. Sample according to one of the preceding claims, **characterised in that** the glass substrate (22) is suitable for detecting molecular contamination, wherein this glass substrate is preferably designed as a ZnS crystal.

11. Container (4) with a sample for measuring particles according to one of the preceding claims, with a lower part (24) and a cover (25) which can be connected to form a seal and define a cavity between them to accommodate the sample (1).

12. Container according to claim 11, **characterised in that** the lower part (24) and the cover (25) have flat surfaces (32) which lie in contact with each other when closed.

13. Container according to claim 11 or 12, **characterised in that** the lower part (24) and/or the cover (25) are made of a polymer, in particular PTFE.

14. Method for particle measurement with the following steps:
attaching a sample according to one of claims 1 to 10 at a location where particulate contamination is to be measured;
collecting particles on a transparent glass substrate of the sample for a certain period of time;
removing the sample from the location;
placing the sample in a transmitted light microscope;
focusing the microscope on the upper side (7) of the glass substrate by means of markings on the glass substrate;
detecting particulate contamination by means of a transmitted light method.

15. Method for particle measurement according to claim 14, further comprising the step of creating optical data and preferably classifying particles by means of the optical data.

16. Method for particle measurement according to claim 14 or 15, further comprising the step of transporting the sample from the location to the microscope by means of a container, preferably the container according to one of claims 11 to 13.

17. Method for particle measurement according to one of claims 14 to 16, further comprising continuous focusing on the basis of the markings on the glass substrate.

18. Method for measuring particles according to one of claims 14 to 17, further comprising a first measurement to detect a first state and a second measurement carried out after a certain period of time to detect a second state, and the step of forming the difference between the second and the first state in order to determine the contamination occurring during this interval.

## Revendications

1. Échantillon (1) conçu pour la mesure de particules avec
un boîtier (2) qui présente une face supérieure (3) et une face inférieure (4) à travers lesquelles s'étend au moins une ouverture traversante (5), et
au moins un substrat en verre (6, 22) avec des repères (17) permettant la mise au point d'un microscope, dans lequel
le substrat en verre (6, 22) est logé dans l'ouverture (5),
dans lequel
les repères (17) sont appliqués au moyen d'un procédé lithographique et ne présentent pas de cavités.

2. Échantillon selon la revendication 1, **caractérisé en ce que** le substrat en verre (6, 22) est réalisé à partir d'une plaquette en verre.

3. Échantillon selon la revendication 1 ou la revendication 2, **caractérisé en ce que** le substrat en verre (6, 22) présente une face supérieure (7) et une face inférieure (8), et au moins un côté s'écarte d'une surface plane idéale de moins de 0,05 mm.

4. Échantillon selon l'une quelconque des revendications précédentes, **caractérisé en ce que** les défauts et/ou imperfections occupent moins de 0,1 ppm de la surface de la face supérieure (7) ou de la face inférieure (8) et/ou du verre lui-même du substrat en verre (6, 22).

5. Échantillon selon l'une quelconque des revendications précédentes, comprenant également au moins un cadre (9) qui entoure au moins partiellement le bord périphérique du substrat en verre (6, 22) et qui est logé dans l'ouverture (5, 21).

6. Échantillon selon la revendication 5, **caractérisé en ce qu'**au moins un cadre (9) est réalisé en un polymère, en particulier en PTFE.

7. Échantillon selon l'une quelconque des revendications précédentes, comprenant également une matière adhésive prévue entre le substrat en verre (6, 22) et le boîtier (2) et/ou le cadre (9).

8. Échantillon selon l'une quelconque des revendications précédentes, **caractérisé en ce que** le boîtier (2) et/ou le cadre comporte une partie supérieure (10) et une partie inférieure (11) qui peuvent être fixées l'une à l'autre et qui présentent des contours (12, 13) complémentaires.

9. Échantillon selon l'une quelconque des revendications précédentes, comprenant également au moins un dispositif de fixation, comme par exemple une ouverture filetée (15), deux ouvertures filetées étant de préférence prévues à deux angles opposés du boîtier (2).

10. Échantillon selon l'une quelconque des revendications précédentes, **caractérisé en ce que** le substrat en verre (22) est approprié pour détecter la contamination moléculaire, et dans lequel ce substrat en verre est réalisé de préférence sous la forme d'un cristal ZnS.

11. Récipient (4) contenant un échantillon pour la mesure de particules selon l'une des revendications précédentes, comprenant une partie inférieure (24) et un couvercle (25) pouvant être reliés de manière étanche et définissant entre eux un espace creux pour loger l'échantillon (1).

12. Récipient selon la revendication 11, **caractérisé en ce que** la partie inférieure (24) et le couvercle (25) présentent des surfaces planes (32) qui sont adjacentes l'une à l'autre à l'état fermé.

13. Récipient selon la revendication 11 ou la revendication 12, **caractérisé en ce que** la partie inférieure (24) et/ou le couvercle (25) sont réalisés en un polymère, en particulier en PTFE.

14. Procédé de mesure de particules comprenant les étapes suivantes :
mise en place d'un échantillon selon l'une des revendications 1 à 10 à un emplacement où la contamination particulaire doit être mesurée ;
collecte de particules sur un substrat en verre transparent de l'échantillon pendant une durée déterminée ;
retrait de l'échantillon de l'emplacement ;
placement de l'échantillon dans un microscope à éclairage par lumière transmise ;
mise au point du microscope sur la face supérieure (7) du substrat en verre au moyen des repères sur le substrat en verre ;
détection de la contamination particulaire au moyen d'un procédé de lumière transmise.

15. Procédé de mesure de particules selon la revendication 14, comprenant également l'étape consistant à produire des données optiques et, de préférence, à classer les particules au moyen desdites données optiques.

16. Procédé de mesure de particules selon la revendication 14 ou la revendication 15, comprenant également l'étape consistant à transporter l'échantillon de l'emplacement jusqu'au microscope au moyen d'un récipient, de préférence le récipient selon l'une quelconque des revendications 11 à 13.

17. Procédé de mesure de particules selon l'une quelconque des revendications 14 à 16, comprenant également la mise au point continue à l'aide des remarques sur le substrat en verre.

18. Procédé de mesure de particules selon l'une quelconque des revendications 14 à 17, comprenant également une première mesure pour détecter un premier état et une seconde mesure effectuée après une certaine période pour détecter un second état, ainsi que l'étape consistant à former la différence entre le second état et le premier état afin de déterminer la contamination qui s'est produite entre eux.
